# EUROPEAN PATENT SPECIFICATION

(11) **EP 0 501 957 B1**
(45) Date of publication and mention of the grant of the patent: **17.07.1996**
(21) Application number: 90905077.5
(22) Date of filing: 20.11.1989
(51) Int. Cl.: C08F 257/02, C08F 255/10, C08G 81/02

(54) **ELASTOMERIC GRAFT COPOLYMERS AND THEIR USE AS COMPATIBILIZERS**
ELASTOMERE PFROPFCOPOLYMERE UND IHRE VERWENDUNG ALS KOMPATIBILISIERUNGSMITTEL
COPOLYMERES ELASTOMERES DE GREFFE ET LEUR UTILISATION COMME AGENTS DE COMPATIBILITE

(43) Date of publication of application: 09.09.1992
(73) Proprietor: EXXON CHEMICAL PATENTS INC., Linden, New Jersey 07036-0710 (US)
(72) Inventor: CHUNG, Tze-Chiang, State College, PA 16803 (US); DIAS, Anthony, Jay, Houston Texas 77062 (US); POWERS, Kenneth, William, Berkeley Heights, NJ 07922 (US); WANG, Hsien-Chang, Edison, NJ 08820 (US)
(74) Representative: Darby, David Thomas
(86) International application number: US8905278
(87) International publication number: WO9107451

(56) References cited:
- EP-A- 0 189 672
- EP-A- 0 243 124
- EP-A- 0 344 021
- US-A- 3 786 116
- Dialog Information Services, File 351, World Patent Index 81-90, Dialog accession no 88-026337/04, Toa Nenryo Kogyo KK:'Prodn. of substit.-contg. styrene polymers - from polymers containing p-methyl-styrene skeleton, organo lithium compounds and lithium extracting agents', & JP-A-62 288 606

## Description

### FIELD OF THE INVENTION

The present invention relates to graft copolymers. More particularly, the present invention relates to graft copolymers including a substantially saturated backbone and a relatively unsaturated polymer grafted thereonto. Still more particularly, the present invention relates to the use of graft copolymers to compatibilize blends of polymers. Still more particularly, the present invention relates to compatibilizing blends of relatively saturated polymers with relatively more unsaturated polymers by use of graft copolymer compatibilizers.

### BACKGROUND OF THE INVENTION

Relatively saturated elastomeric polymers, such as butyl rubber, which is a copolymer primarily comprising isobutylene with a small percentage of isoprene, have been found to have a number of highly desirable physical properties. These include low air permeability, broad damping peaks, and other such properties which render these polymers of commercial significance, particularly in tire production. However, some difficulties have been encountered with the use of these polymers. Most particularly, such low unsaturated rubber compounds as polyisobutylene copolymers are highly incompatible with most other polymers, and most particularly with more unsaturated elastomeric and plastic compounds. Therefore, in the face of this incompatibility it has been quite difficult to apply such low unsaturated elastomeric compounds to other fields, particularly in the area of polymer blends. Even in the production of tires, there is a weak adhesion between these elastomers and other more unsaturated elastomeric compounds which has created problems in the use of these blends for tire production and the like.

It has been known for some time that blends of incompatible polymers of this type can be improved in some cases by adding a suitable compatibilizer so as to alter the morphology of these blends. More particularly, to be successful it is necessary to reduce the domain sizes for both of the homopolymers in the blend.

It is known in some instances, for example, to use block copolymers as compatibilizers in such situations. For example, several studies have shown attempts to compatibilize blends of polyisoprene and polybutadiene by using diblock materials composed of these two materials. See R. Cohen et al Macromolecules 15, 370, 1982; Macromolecules 12, 131, 1979; J. Polym. Sci., Polym. Phys. , 18, 2148, 1980; J. Macromol Sci.-Phys. B17 (4), 625, 1980. Most of these block copolymers have been previously produced by sequential anionic polymerization processes, which are thus limited to a relatively small number of monomers. It is also known to compatibilize other rubber-polymer blends, such as blends of ethylene-propylene rubber with polypropylene, by using graft copolymers of these two materials. See A. Y. Coran et al, U.S. Patent No. 4,299,931, as well as commonly assigned co-pending applications Serial Nos. 07/264,484 and 07/264,485, filed on October 28, 1988.

In general, a number of the techniques required to produce these graft copolymers are inefficient, many resulting in ill-defined products, due to gel formation, backbone degradation, the formation of homopolymers, etc.

Various techniques have also been taught for producing graft polymers onto polyisobutylene through various routes, including cationic, radical and anionic polymerization techniques. (See J. P. Kennedy et al, J. Appl. Polym. Sci.; Appl. Polym. Symp. 30 (1977); J. Macromol. Sci., Chem. A3, 861 (1969); Adv. Polym. Sci. 14, 1 (1974).) The reference includes articles directed to thermoplastic grafts (at pages 1, 13, 51, 119, 165 and 179) and rubber grafts (at pages 1, 19 and 141). The thermoplastic grafts disclose polyisobutylene grafts from a thermoplastic backbone polymer, primarily PVC. In one article (at page 119) there is disclosed polystyrene grafted from a chlorinated butyl backbone initiator; homopolymer polystyrene is also produced in such a system. The reference grafted products were not thoroughly characterized and included the presence of homopolymer and gel. Furthermore, the copolymer composition of the present invention differs significantly from all of those taught in the reference and also results in uniformly grafted products. Since polyisobutylene chains are essentially inert to vulcanization, they also differ reactively from the copolymer of the present invention. Finally, the products are not taught to be used as compatibilizers.

It has also been known to employ anionic grafting from polydienes by metallating the polymer with an alkyl lithium and tetramethylethylenediamine (TMEDA) or butyllithium/alkali metal hydroxide. (See A. W. Halasaa et al, J. Poly. Sci., Part A1, 9, 139 (1971); and J. Polym. Sci., Chem. Ed. 14, 497 (1976).) Anionic grafting-onto reactions which involve coupling an electrophilic functional group onto the backbone polymer chain with a preformed polymer chain containing a nucleophilic end have also been known. For example, the literature discusses the electrophilic polymers including halogenated poly(isobutylene-co-isoprene), polybutadiene and EPDM. (See B. W. Brooks, J.Polym. Sci. Part B5, 641 (1967) ; and Y. Minoura et al, J. Polym. Sci, Part A1 6, 2773 (1968).)

### SUMMARY OF THE INVENTION

In accordance with the present invention novel graft copolymers have now been discovered which are extremely useful elastomeric polymer compositions in their own right, and which are also particularly useful in compatibilizing certain rubber-rubber polymer blends, most particularly blends of relatively saturated elastomers, such as butyl rubbers, with more highly unsaturated elastomeric polymers, such as polyisoprene and natural rubber.

Most particularly in accordance with this invention, it has been found that the preparation of an electrophile which comprises a copolymer of isoolefins having from 4 to 7 carbon atoms with halogenated para-alkylstyrene is extremely important in obtaining the graft copolymers of the present invention which are useful both as polymers themselves and as such compatibilizers. By doing so it is then possible to produce the graft copolymers by a graft-onto reaction. Most particularly, in accordance with the present invention, graft copolymers have been discovered comprising 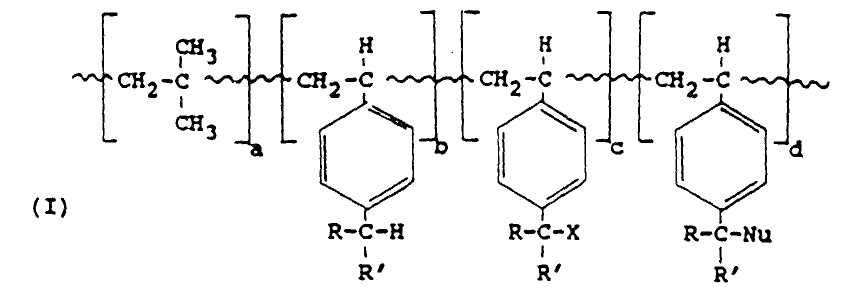 wherein R and R' are independently selected from the group consisting of hydrogen, alkyl, and the primary and secondary alkyl halides. Furthermore, in this formula, the combination of a + b + c + d represents the empirical formula for a substantially random graft copolymer (the wavy lines indicate elements of a random polymer structure based on the indicated moieties), wherein a ranges from 14 to 70,000, b ranges from 0 to 70,000, c ranges from 0 to 70,000, d ranges from about 1 to 70,000, X comprises a halogen, and Nu comprises a mono-functional polymeric nucleophile having a molecular weight of at least 1,000 and being sufficiently nucleophilic such that said nucleophile is capable of donating electrons to benzyl halides, thereby displacing the halogen from the benzyl halide.

In accordance with a preferred embodiment of the present invention, Nu comprises 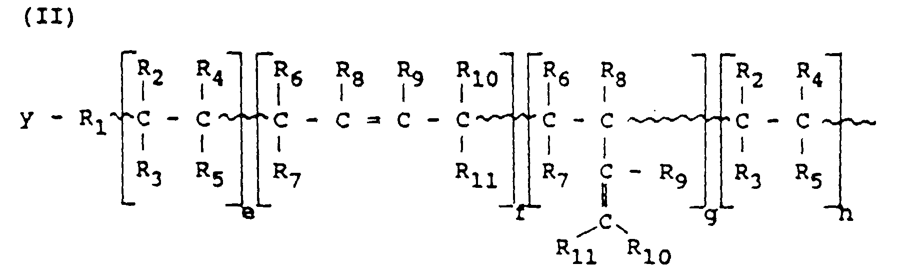 wherein R₂ and R₃ comprise a component selected from the group consisting of aryl, diaryl, polyaryl, and the alkyl, aryl, alkaryl, alkoxy, cycloalkyl, aryloxy and dialkylamino derivatives of the aryl, diaryl, or polyaryls, wherein R₄ through R₁₁ are independently selected from the group consisting of hydrogen, alkyl, and substituted alkyl, f ranges from 0 to 20,000, g ranges from 0 to 20,000, and h ranges from 0 to 10,000, with the further proviso that the sum of f + g + h ranges from 20 to 20,000, y comprises a linked nucleophilic residue, and furthermore, wherein either (a) R₁ is (CH₂)ₘ, wherein m is a positive integer, and e is 0 or 1, or (b) R₁ is (CH₂)ₘ, wherein m is 0, and e ranges from 0 to 1,000.

In a preferred embodiment the linked nucleophilic residue (y) can be 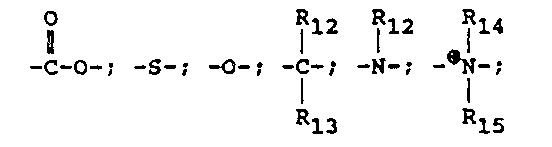 wherein R₁₂, R₁₃, R₁₄, and R₁₅ can be hydrogen, alkyl or aryl. The nucleophilic residue can also be derived from yM where M is an alkali or alkaline earth metal such as sodium, potassium, magnesium, or lithium, or an onium ion, such as tetraalkylammonium, preferably tetramethylammonium or tetrabutylammonium.

In this manner, by using a graft-onto reaction scheme the graft copolymers of Formula (I) above can then be produced, and more particularly this can be accomplished in a manner using a monofunctional nucleophile so as to minimize gel formation and other indicia of inefficient grafting which have generally resulted from repeating side reactions taking place therein.

In accordance with another embodiment of the present invention, graft copolymers are provided of
(a) an electrophile comprising a copolymer of an isoolefin having from 4 to 7 carbon atoms and a para-alkylstyrene having the formula 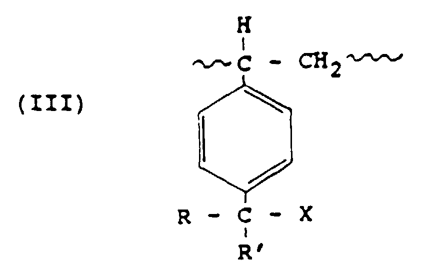 wherein X is a halogen, and R and R' are independently selected from the group consisting of hydrogen, alkyl, and primary and secondary alkyl halides, and
(b) a polymeric nucleophile having a molecular weight of at least 1,000 and being sufficiently nucleophilic such that said nucleophile is capable of donating electrons to benzyl halides, such as those nucleophiles set forth in Formula II above.

In accordance with another embodiment of the present invention, there is provided a method for compatibilizing a polymer blend of (a) a first polymer including repeating units of the formula 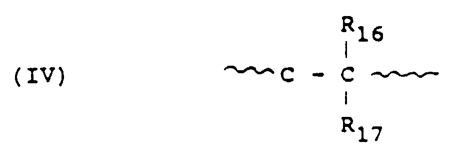 wherein R₁₆ and R₁₇ are hydrogen, alkyl, or aryl, and (b) a second polymer which is incompatible with the first polymer, which includes adding to said polymer blend a compatibilizer comprising a graft copolymer comprising 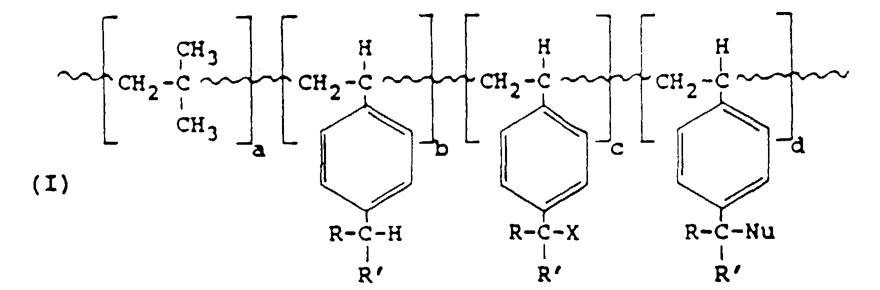 wherein R and R' are independently selected from the group consisting of hydrogen, alkyl, and the primary and secondary alkyl halides, and furthermore where the combination of a + b + c + d represents the empirical formula for a substantially random graft copolymer, and wherein a ranges from 14 to 70,000, b ranges from 0 to 70,000, c ranges from 0 to 70,000, d ranges from 1 to 70,000, X comprises a halogen, especially chlorine, bromine, or iodine, and Nu comprises a nucleophilic residue provided by a polymeric nucleophile having a molecular weight of at least 1,000 and being sufficiently nucleophilic such that said nucleophile is capable of donating electrons to benzyl halides, again such as those in Formula II above.

In accordance with another embodiment of the present invention methods for preparing graft copolymers are set forth including providing an electrophile comprising a copolymer of an isoolefin having from 4 to 7 carbon atoms and a para-alkylstyrene having the formula 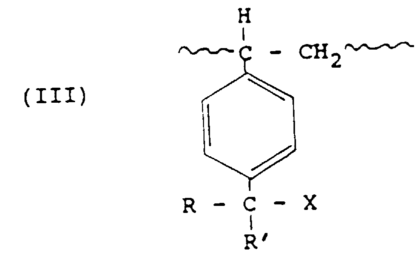 wherein X is a halogen and R and R' are independently selected from the group consisting of hydrogen, alkyl, and primary and secondary alkyl halides, and

(b) a polymeric nucleophile having a molecular weight of at least 1,000 and being sufficiently nucleophilic such that said nucleophile is capable of donating electrons to benzyl halides.

### DETAILED DESCRIPTION

The present invention is most particularly based upon a specific class of graft copolymers which have a wide range of properties, and which are also extremely useful in the compatibilization of certain polymer blends. Most particularly, these graft copolymers can be formed with high graft-on efficiency, and for this reason the resulting copolymers are completely soluble in common organic solvents. It has thus been found possible to prepare these relatively well-defined graft copolymers, which include covalent bonds between the two homopolymers with no detectable homopolymers and gel particles. Thus, when using these graft copolymers as compatibilizers, it has been found that they can serve as emulsifiers at the interface between the two polymer domains, thus greatly changing the morphology of these blends. Thus, the macro-phase separation between the two incompatible copolymers can be dramatically reduced, that is, the domain size can be relatively small, such as as small as 30 nm.

The specific graft copolymers which have been produced in accordance with this invention are most particularly graft copolymers of polyisobutylene. However, the specific type of electrophile which forms a basis for these graft copolymers is a copolymer of an isoolefin having from 4 to 7 carbon atoms and a para-alkylstyrene having the formula 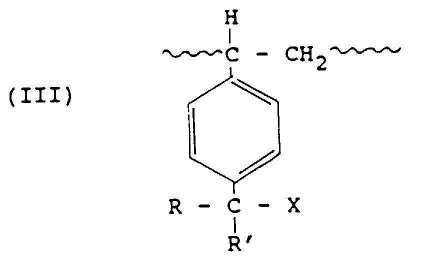 wherein X is a halogen and R and R' are independently selected from the group consisting of hydrogen, alkyl, and primary and secondary alkyl halides. It has thus been discovered that these electrophiles can now be readily used in a nucleophilic substitution reaction with an appropriate nucleophile to produce the graft copolymers hereof. These nucleophiles (Nu) are thus produced by anionic polymerisation of the olefinic polymers hereof, namely those having the formula (II) 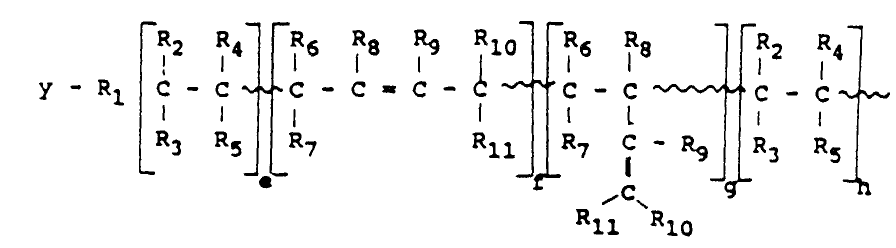 wherein R₂ and R₃ comprise a component selected from the group consisting of aryl, diaryl, polyaryl, and the alkyl, aryl, alkaryl, alkoxy, cycloalkyl, aryloxy and dialkylamino derivatives of the aryl, diaryl, or polyaryls, wherein R₄ through R₁₁ are independently selected from the group consisting of hydrogen, alkyl, and substituted alkyl, f ranges from 0 to 20,000, g ranges from 0 to 20,000, and h ranges from 0 to 10,000, with the further proviso that the sum of f + g + h ranges from 20 to 20,000, y comprises a linked nucleophilic residue, and furthermore, wherein either (a) R₁ is (CH₂)ₘ, wherein m is a positive integer, and e is 0 or 1, or (b) R₁ is (CH₂)ₘ, wherein m is 0, and e ranges from 0 to 1,000, and grafting said nucleophile onto said electrophile. Thus, useful nucleophiles are based on, for example, polyisoprene, polybutadiene, polydimethylbutadiene and styrene-butadiene copolymer rubbers, including block and random (SBR) copolymer rubbers.

The polymeric electrophiles used for producing the graft copolymers of this invention are, as stated above, copolymers of isoolefins having from 4 to 7 carbon atoms and para-alkylstyrene compounds of Formula (III) above. These copolymers can be produced in a manner such as that set forth in U.S. Patent Application Serial No. 07/199,665, filed on May 27, 1988 or the corresponding EP-A-344021, to which the reader is referred for production details.

The nucleophilic substituents of the present invention are prepared using anionic polymerization techniques. The specific types of monomers which can be used to produce these nucleophiles generally yield attached polymeric nucleophiles having the following formula: 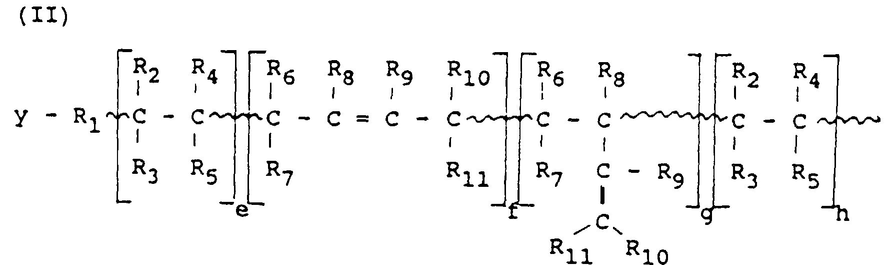 wherein R₂ and R₃ comprise a component selected from the group consisting of aryl, diaryl, polyaryl, and the alkyl, aryl, alkaryl, alkoxy, cycloalkyl, aryloxy and dialkylamino derivatives of the aryl, diaryl, or polyaryls, wherein R₄ through R₁₁ are independently selected from the group consisting of hydrogen, alkyl, and substituted alkyl, f ranges from 0 to about 20,000, g ranges from 0 to about 20,000, and h ranges from 0 to about 10,000, with the further proviso that the sum of f + g + h ranges from about 20 to about 20,000, y comprises a linked nucleophilic residue, and furthermore, wherein either (a) R₁ is (CH₂)ₘ, wherein m is a positive integer, and e is 0 or 1, or (b) R₁ is (CH₂)ₘ, wherein m is 0, and e ranges from 0 to about 1,000.

Thus, in the case (a) where e is 0, the nucleophilic substituent will preferably have the formula 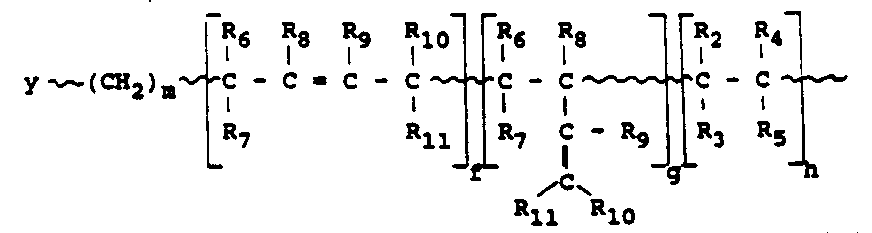 and a highly preferred embodiment of this nucleophilic substituent is where R₄ through R₁₁ are hydrogen.

In the case (b) where m is 0, the nucleophilic substituent will preferably have the formula 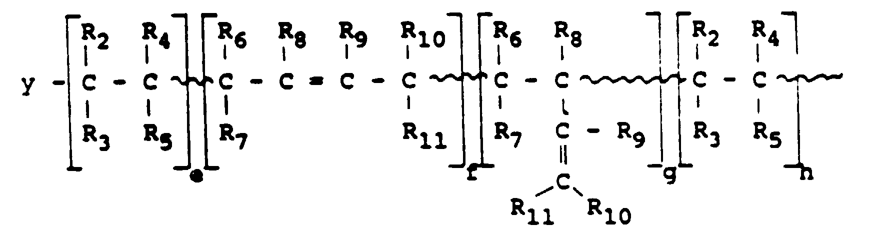 and a highly preferred embodiment of this nucleophilic substituent is where R₄ through R₁₁ are hydrogen; or where one of R₆ through R₁₁ is aryl, such as R₈, and this substituent is thus prepared from phenyl, -1,3-butadiene; or where R₈ is alkyl, such as methyl, while R₆, R₇ and R₉ through R₁₁ are hydrogen, and this substituent is thus prepared from isoprene monomer (natural rubber). These materials are prepared to have nucleophilic monofunctionality through the anionic polymerization process and termination with a suitable termination agent.

The nucleophilic substituents of the present invention may be prepared using anionic polymerization techniques utilizing one of the above-described polymerizable monomers, or a combination of such monomers, to thereby form "living polymers." These "living polymers" are conveniently prepared by contacting the monomers or combination of monomers with an anionic polymerization initiator in the presence of an inert organic diluent which does not participate in or interfere with the polymerization reaction.

The initiators for these anionic polymerizations are the alkali metal hydrocarbons which produce a mono-functional "living polymer," i.e., in which only one end of the polymer contains a reactive anion. Many suitable anionic initiators are described by R. Milkovic et al in U.S. Patent No. 3,786,116.

The amount of initiator, the solvent, and the temperature conditions for preparing living polymers, are widely found in the art. Typical examples are also given by R. Milkovic et al in U.S. Patent No. 3,786,116, at columns 8 and 9.

The above-described "living polymers" are susceptible to further reactions, including further polymerization. Thus, if additional monomer is added to the living polymer, the polymerization is renewed and the chain grows until no more monomer remains. Alternatively, a second, different such anionically polymerizable monomer may be introduced, and the chain can then grow and incorporate this monomer. In this manner, a wide range of block copolymer structures may be prepared. In each case the resulting copolymer remains "living," and may itself be used as a very active organolithium nucleophile, or it may be converted through well-known functionalization chemistry to a number of other less reactive but no less desirable nucleophiles.

These "living polymers" can then be converted into a variety of nucleophiles by controlled termination reactions with a number of electrophiles, including epoxides, including both ethylene oxide and propylene oxide; episulfides, including both ethylene sulfide and propylene sulfide; and carbon dioxide. Termination of these living polymers by any of the above types of terminating agents is accomplished by simply adding the terminating agent to the solution of living polymer at the temperature at which the living polymer is prepared. Reaction is immediate, and the yield is high. A slight molar excess of the terminating agent, with respect to the amount of catalyst, may be used, although the reaction proceeds on a stoichiometric basis.

Termination may be conducted in any suitable inert solvent. It is generally advisable to utilize the same solvent system which was employed in the preparation of the living polymer. In a preferred embodiment of this invention, the termination reaction is conducted in a hydrocarbon solvent or mixtures containing limited quantities of polar solvents, such as tetrahydrofuran.

The graft copolymers themselves can thus then be prepared by combining these electrophiles and nucleophiles in an appropriate procedure. In particular, the graft-onto reaction involves the polymeric nucleophilic substitution generally set forth as follows

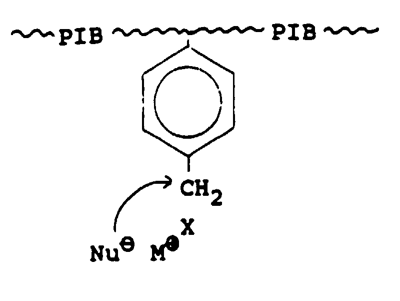

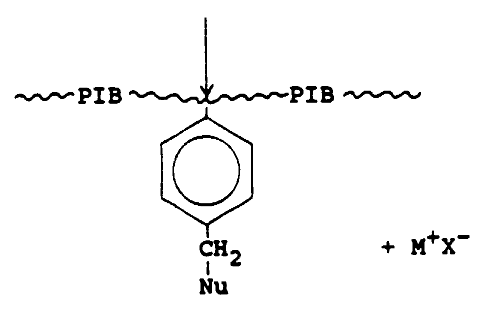

Most nucleophilic substitution of this type involve some degree of side reactions, such as metal-halide exchange, protonation, dimeric termination, elimination, etc. In the polymer cases these side reactions can seriously affect the final properties of these polymers. A small amount of these side reactions in graft-onto reactions will result in crosslinking which will dramatically decrease the processibility of the copolymer in the polymer blends. By using the benzyl halide components of the present invention, however, these side reactions are minimized. The benzyl halide compounds are thus not only excellent electrophiles, but they also eliminate the possibility of the elimination reaction occurring. Thus, while metal-halide exchange, proton extraction, and dimeric termination are still problems to some extent in this reaction, the results obtained are excellent in this regard. In order to decrease the degree of metal-halide exchange, however, a polar solvent such as tetrahydrofuran is employed. Alternatively, in order to decrease the degree of metal-halide exchange, "capping" of the nucleophile with the group represented by 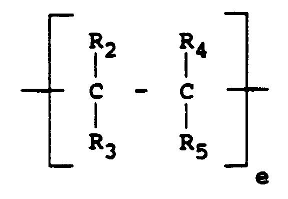 in Formula II above can be employed. This decreases the activation energy, promotes the nucleophilic substitution reaction, and suppresses the metal-halide exchange.

### Example 1 - Preparation of Graft Copolymers

### (A) (i) Polyisobutylene-Polyisoprene Graft Copolymers

In this Example, a graft copolymer was produced in which R and R' in Formula (I) were hydrogen, and the nucleophile in Formula (II) included one in which e, h and m were 0, R₈ was a methyl group, and R₆, R₇, and R₉ through R₁₁ were hydrogen. It is initially noted that, in each of Examples 1(A)(i) - (A)(iv) all of the reactions and reagents were handled under vacuum or inert atmosphere (nitrogen or argon), with careful exclusion of both oxygen and water. In Examples 1(A)(i) - (A)(iii) isoprene was dried by distillation from triethylaluminum or dibutylmagnesium, and the polymerization solvent (heptane, hexane or THF) was dried by distillation from sodium naphthalenide or butyllithium. Isoprene or THF was then vacuum distilled into the reaction just prior to use. All glassware, syringes and needles were oven dried at 150°C for three hours. The hot glassware was cooled and assembled under inert atmosphere usually in a dry box.

The graft reaction of polyisoprene to the isobutylene copolymer was carried out in a high vacuum apparatus. The system consisted of two 1 liter flasks (A and B), which were connected by a teflon stopcock. Another stopcock attached the entire apparatus to the vacuum line through flask A.

After the apparatus was dried in an oven for over 12 hours, it was immediately put into the vacuum chamber of the dry box, which was then placed under a dry inert atmosphere for 30 minutes before being moved into the drybox. A 10 gram sample of poly (isobutylene-co-4-bromomethylatyrene) (M_{w}=150,000, M_{w}/Mₙ=2.6) was placed into flask B in the dry box. The apparatus was then removed from the dry box and attached to a vacuum line. The pressure in the apparatus was reduced to (10⁻⁵mm Hg) 1,33 x 10⁻³ Pa and the temperature was raised to 50°C and kept there overnight. The poly(isobutylene-co-4-bromomethylstyrene) was then purified using successive THF dissolution - precipitation cycles: THF(300 ml) was vacuum distilled from a green solution of sodium naphthalenide containing excess sodium and condensed into the flask containing the polymer. It is well known in the art that sodium naphthalenide exists only in the total absence of water and oxygen; hence, the green color is an indication of the solvent purity. The mixture was agitated until the polymer dissolved. Then the THY and volatile impurities were vacuum distilled from the polymer solution and condensed back into the flask containing the sodium naphthalenide. This action resulted in a discharge of the green color; which gradually returned as the impurities were consumed in the reaction with sodium. This cycle was repeated until the green color of the sodium naphthalenide solution was not discharged. Then the polymer was redissolved once more with THF and the apparatus was brought into the dry box. Butyllithium (1 ml of 0.25M in hexane) was added to the other flask (A). The initiator quantity determined the molecular weight of the resulting polyisoprene. The system was then removed from the dry box and reattached to the vacuum line. Hexane (300 ml) was vacuum distilled from butyllithium and condensed into the flask (A) containing the initiator. Next, isoprene (12 ml) was vacuum distilled from butylmagnesium and condensed into the initiator solution (flask A). The polymerization was run at least 3 hours before proceeding to the graft reaction.

The graft reaction was conducted by pouring the polyisoprenyllithium solution into the flask containing the polyisobutylene copolymer. However, the hexane polymerization solvent was replaced with THF, after isoprene polymerization and prior to grafting in order to avoid gel formation. In general, it is also possible to conduct gel-free graft reactions in mixed solvents; increasing the solvent polarity by the addition of at least 50% by volume of a polar nonprotic solvent like THF. The graft-onto reaction was initiated by opening the stopcock which joined the two flasks and pouring all, except for a small quantity retained for GPC analysis, of the polyisoprenyllithium solution into the vigorously agitated polyisobutylene copolymer solution. The graft reaction occured almost instantaneously upon mixing. The graft copolymer was then isolated in isopropanol containing 0.1% BHT.

The resulting polyisoprene homopolymer served as a reference, and had a narrow MW distribution (M_{w}/Mₙ) = 1.1) with Mₙ - 92,000. The graft copolymer (15.2 grams) was washed with isopropanol/BHT and dried in a vacuum oven overnight at 45°C. GPC results (based on polystyrene calibration standards) indicate a broad distribution (M_{w}/Mₙ = 8) and M_{w} = 560,000.

### (A)(ii) Polyisobutylene-Polyisoprene Graft Copolymer

Following the procedure of Example 1(A)(i), a 10 gram sample of polyisobutylene copolymer, containing 1.5 mole percent 4-bromomethylstyrene, M_{w} = 250,000, M_{w}/Mₙ = 2.6, was dissolved in 200 ml dry THF in flask B. The polymerization was conducted in hexane, as in example 1(A)(i). This time, however, the graft-onto reaction was conducted using the as-prepared polyisoprenyl lithium hexane solution by pouring it into the vigorously agitated polyisobutylene copolymer solution. Gel formation was observed instantaneously with mixing. An elastic polymer was obtained after adding 400 ml of isopropanol into the reactor. However the resulting polymer was insoluble.

### (A) (iii) Preparation of Polyisobutylene-Polyisoprene Graft Copolymer

The procedure for the purification of the polyisobutylene copolymer and for the polymerization of the isoprene was again followed as presented in Example 1(A)(i). This time, however, instead of replacing the hexane polymerization solvent, an excess of tetramethylethylenediamine (TMEDA) was added. This complexing agent activated the displacement reaction, and no gel was observed when the polyisoprenyl lithium solution containing TMEDA was added to the polyisobutylene copolymer solution. The resulting graft copolymer (18.5 grams) was isolated by precipitation in isopropanol/BHT and dried in a vacuum oven overnight (0.1 mm, 50°C)(0,133 x 10² Pa, 50°C). GPC measurement of the resulting graft copolymer indicated a broader MW distribution (M_{w}/Mₙ = 8), peak at 630,000 with a shoulder at 180,000.

### (A) (iv) Preparation of Polyisobutylene/Styrene-Butadiene Rubber Graft Copolymer

Once again, following the procedure of Example 1 (A)(i), a 10 gram sample of poly(isobutylene-co-4- bromomethylstyrene) (Mw=230,000, Mw/Mn=2.8) was placed into the apparatus and subjected to the identical purification cycles. The pressure in the apparatus was reduced to 10⁻⁵mm Hg and the temperature was raised to 50°C and kept there overnight. The poly(isobutylene-co-4-bromomethylstyrene) was then purified using successive THF dissolution - precipitation cycles: THF (300 ml) is vacuum distilled from a green solution of sodium naphthalenide containing excess sodium and condensed into the flask containing the polymer. It is well known in the art that sodium naphthalenide exists only in the total absence of water and oxygen; hence, the green color is an indication of the solvent purity. The mixture was agitated until the polymer dissolves. Then the THF and volatile impurities were vacuum distilled from the polymer solution and condensed back into the flask containing the sodium naphthalenide. This action resulted in a discharge of the green color; which gradually returned as the impurities were consumed in the reaction with sodium. This cycle was repeated until the green color of the sodium naphthalenide solution was not discharged. Then the polymer was redissolved once more with THF and the apparatus was brought into the dry box. Butyllithium (2 ml of 0.1M in hexane) was added to the other flask (A). The quantity of the initiator determined the molecular weight of the resulting styrene-butadiene rubber (SBR). The system was then removed from the dry box and reattached to the vacuum line. Hexane (300 ml) was vacuum distilled from butyllithium and condensed into the flask (A) containing the initiator. Next, 1,3-butadiene (10.7 ml) and styrene (3.6 ml) were vacuum distilled from butylmagnesium and condensed into the initiator solution (flask A). The polymerization was run at least 28 hours before proceeding. After 28 hours the flask was disconnected from the vacuum line and brought into the drybox where a THF solution of 1,1-diphenylethylene (4 ml of a 0.1 molar solution) was added to the connecting tube. The apparatus was then removed from the drybox and reattached to the vacuum line. The 1,1-diphenylethylene solution was degassed with three freeze-pump-thaw cycles: frozen with liquid nitrogen; evacuated to 10⁻⁵mm; system closed and thawed. Then the colorless 1,1-diphenylethylene solution was added to the yellow-orange styrene-butadiene solution (a yellow-orange color is indicative of benzylic and allylic lithium carbanions). This mixture was reacted for 1 hour after which a deep orange-red color resulted (which is characteristic of diphenylmethyl carbanions and is consistent with the conversion of all chains ends to diphenylmethyllithium).

The graft reaction was conducted by pouring the poly(styrene-butadiene)lithium solution into the flask containing the polyisobutylene copolymer. In this ecample, it was not necessary to replace the hexane polymerization solvent. Instead, gelation was minimized through the conversion of very active benzylic (styryl) and allylic (butadienyl) chain ends to much less active and more stable diphenylmethyllithium chain ends. The graft-onto reaction was then initiated by opening the stopcock which joined the two flasks and pouring all, except for a small quantity retained for GPC analysis, of the poly(styrene-butadiene)lithium solution into the vigorously agitated polyisobutylene copolymer solution. The graft reaction occured almost instantaneously upon mixing. The graft copolymer was then isolated in isopropanol containing 0.1% BHT.

The resulting styrene-butadiene rubber polymer had a narrow molecular weight distribution (Mw/Mn=1.05) with Mw=84,000. The graft copolymer had a molecular weight distribution of Mw/Mn=3.2 and Mw=538,000.

### Example 2 - Preparation of Nucleophile

A monofunctional nucleophile based upon polyisoprene was prepared, namely a nucleophile of Formula (II) in which R₈ was a methyl group, m was 0, and R₆, R₇ and R₉ through R₁₁ were hydrogen. This nucleophile was prepared by neutralization of carboxylic acid-terminated polyisoprene. In this example, the polyisoprene carboxylic acid was prepared by "living" anionic polymerization of isoprene (10% wt.) in heptane at 40°C with s-butyl-lithium catalyst. The polymerization was terminated at -78°C by addition of the "living" polymer solution to a saturated solution of carbon dioxide in tetrahydrofuran. The polymer was precipitated in isopropanol containing 1 ml of HCl and 0.2 wt. % BHT. The polymer was then kneaded in fresh isopropanol/BHT before drying for 24 hours at 45°C and 0.1 mm Hg pressure. The molecular weight of the polyisoprene carboxylic acid was 20,000. The polyisoprene carboxylic acid was neutralized in THF solution with either potassium t-butoxide or tetrabutylammonium hydroxide. The polyisoprene carboxylate was precipitated in isopropanol/BHT (0.2 wt. %) and the polymeric salt was dried for 24 hours at 45°C and (0.1 mm Hg) 0,133 x 10² Pa pressure. FTIR analysis of the polyisoprene carboxylic acid showed a peak at 1710 cm⁻¹ which corresponded to the carboxylic acid end group. This peak disappeared, and a new peak at 1580 cm⁻¹ appeared after neutralization, which is consistent with the formation of the corresponding salt.

### Example 3 - Nucleophilic Displacement

Since nucleophilic displacements are generally dependent upon the solvation state of the reactants and of the products, these reactions were run in a variety of solvents. In particular, (i) THF, in which most anions and cations are solvated; (ii) cyclohexane, in which few ions are solvated (and thus, this was analogous to reactions in the melt); and (iii) cyclohexane with 18-crown-6, which specifically solvated the potassium cation.

Initially, THF solutions (10 wt. %) of the para-bromomethylstyrene copolymer used in Example (A)(i) and polyisoprene potassium carboxylate were each prepared and added along with a magnetic stir bar into a 250 ml round-bottom flask. The flask was equipped with a serum stoppered condenser and a nitrogen purge was established. The flask was heated to reflux and aliquots were removed periodically. The reaction was complete after 48 hours (no further change in GPC peak areas observed). The polymer was precipitated in isopropanol containing 0.5 ml of HCl and 0.2 wt. % BHT. The polymer was dried in 24 hours at 45°C and 0.1 mm pressure. Evidence for grafting was obtained by comparing GPC integrated areas and morphology for the grafts to those obtained for blends of the same composition. In the 50:50 blend, the high molecular weight peak area corresponding to the polyisobutylene copolymer was equal to the low molecular weight peak area corresponding to polyisoprene carboxylic acid. Upon grafting, this ratio was 70% high molecular weight, corresponding to graft copolymer, and 30% low molecular weight ungrafted polyisoprene.

Melt reactions between pairs of polymer reagents can provide a straightforward synthetic route to commercial quantities of materials. However, the limited agitation which is available in laboratory scale equipment used to study such reactions, e.g., Brabender mixers, tends to obfuscate fundamental studies of bulk reactions. The following experiment used a model solution reaction in cyclohexane to demonstrate the feasibility of the melt system. This model system allowed temperature and mixing to be standardized thereby providing clear information about the reaction. Thus cyclohexane solutions (10 wt. %) of the para-bromomethylstyrene copolymer used in Example 1(A)(i) and the potassium polyisoprene carboxylate produced in Exampl. 2(B) were each prepared and reacted as described above for the THF reaction. After a 48 hour reaction period the extent of grafting was approximately 10% (GPC and FTIR). In order to decrease reaction times and increase the grafting efficiency it was necessary to solvate the cation. This was done by two methods: addition of 18-crown-6 to the reaction containing the potassium salt, and by preparing and reacting tetrabutylammonium polyisoprene carboxylate. Both of these methods reduced the reaction time to one hour, and increased the extent of grafting.

### Example 4 - Preparation of Polyisoprene Graft Copolymer Formed Using Polyisoprenecarboxylic Acid

(A)(i) In this Example, polyisoprene graft copolymers were formed using polyisoprene carboxylic acid which was prepared by carbonation of poly(isoprenyl)lithium in heptane using 1,1-diphenylethylene, tetrahydrofuran, and carbon dioxide. A three liter round bottom flask was fitted with a reflux-takeoff head and an adapter containing a stopcock and serum stopper. The flask was charged with 2.75 liters of heptane. The heptane was distilled until 2 liters remained, and the flask was then allowed to cool to 40°C before isoprene (200 grams, 300 ml) was added. The flask was placed in a hexane bath to aid in regulation of the temperature. Polymerization was initiated by adding 25 ml of s-butyllithium (1 M, in hexane). The temperature of the bath rose to 50°C, and the viscosity increased rapidly. After four hours, a solution of 1,1-diphenylethylen. in THF was added (50 ml of 0,05 grama/ml solution). A bright orange-red color immediately appeared. The flask was then cooled to -10° and reagent grade carbon dioxide was bubbled into the flask. The color was discharged instantaneously with mixing. The resulting polymer was neutralized with dilute HCl (3 ml of concentrate HCl, 7 ml of water, and 50 ml of THF) and coagulated in isopropanol. The resulting polymer had a narrow molecular weight distribution (M_{w} - 74,000, Mₙ - 68,000). A heptane solution containing 7.5 grams of poly(isoprenyl)carboxylic acid (as prepared above) was treated with tetrabutylammonium hydroxide (10 ml, 1M, in methanol) and butylated hydroxytoluene (BHT = 2 grams). This solution was then added to a 1 liter flask containing a heptane solution of poly(isobutylene-co-4-bromomethylstyrene) (22.5 grams in 500 ml). The flask was heated to 70°C and the mixture was reacted for four hours. The solution was then placed in a teflon tray and the solvent was removed in vacuum. FT-infrared analysis of thin films indicated that all of the carboxylate groups present in the sample were converted into the ester form. GPC analysis of the THF solutions (3 mg/ml) of the graft copolymer conducted on a Waters 150 GPC at 0.5 cm³/min indicated that less than 5% ungrafted polyisoprene remained.
(A)(ii) In this Example, polyisoprene graft copolymer was formed using poly(isoprene)carboxylic acid prepared by carbonation of poly(isoprenyl)lithium in heptane using tetramethylethylenediamine and carbon dioxide. A three liter round bottom flask was fitted with a reflux-takeoff head and an adapter containing a stopcock and serum stopper. The flask was charged with 2.75 liters of heptane. The heptane was distilled until 2 liters remained, and the flask was then allowed to cool to 40°C before isoprene (200 grams) was added. The flask was then placed in a hexane bath to aid in the regulation of the temperature. Polymerization was initiated by adding 18.9 ml s-butyllithium (1 M, in hexane). The temperature of the bath rose to 50°C, and the viscosity increased rapidly. After four hours, a solution of the TMEDA in heptane was added (25 ml of 0.25 gm/ml solution). The flask was then cooled to -10° and reagent grade carbon dioxide was bubbled into the flask. The color discharged instantaneously with mixing. The resulting polymer was split into two portions. A small aliquot was analyzed by GPC (M_{w} = 58,960), Mn = 58,340, M_{w}/Mₙ = 1.06). This sample was free of high molecular weight modes, which are indicia of coupling side-reactions.

Polyisoprene lithium carboxylate (50 grams), prepared as above, was reacted with tetrabutylammonium fluoride (15 ml, 1 M in THF). The resulting solution was added to a solution of poly(isobutylene-co-4-bromomethylstyrene) (150 grams in 1.5 liters of heptane). The mixture was stirred and heated slowly to 70°C, at which time it was reacted for two hours. After two hours the polymer was isolated by coagulation in isopropanol (0.1 gram BHT). GPC of the resulting graft copolymer indicated that more than 90% of the polyisoprene was grafted.

### Example 5 - Use of Graft Copolymers as Compatibilizers

In this Example, a graft copolymer composed of 50% para-bromomethylstyrene copolymer and 50% polyisoprene used in Example 1(A)(i) was analyzed by TEM, This sample, when cast from THF on water, exhibited polyisoprene domains whose size averaged 0.04 µm. Cast films of a blend with the same composition were macroscopically heterogeneous in which large domains (>10 µm) of each polymer were observed under optical phase contrast. When the graft copolymer was added to the blend (1/3 para-bromomethylstyrene, 1/3 polyisoprene, and 1/3 of the graft copolymer), the morphology was altered, and the polyisoprene domains averaged 0.1 µm with the graft material forming the continuous phase. This demonstrated the utility of the graft copolymer as a compatibilizer for these blends.

## Claims

1. A graft copolymer of
(a) an electrophile comprising a copolymer of an isoolefin having from 4 to 7 carbon atoms and a paraalkylstyrene having the formula 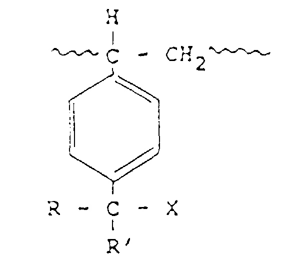 wherein X is a halogen and R and R' are independently selected from the group consisting of hydrogen, alkyl, and primary and secondary alkyl halides ; and
(b) a polymeric nucleophile having a molecular weight of at least 1,000 and being sufficiently nucleophilic such that said nucleophile is capable of donating electrons to benzyl halides.

2. The graft copolymer of claim 1 comprising 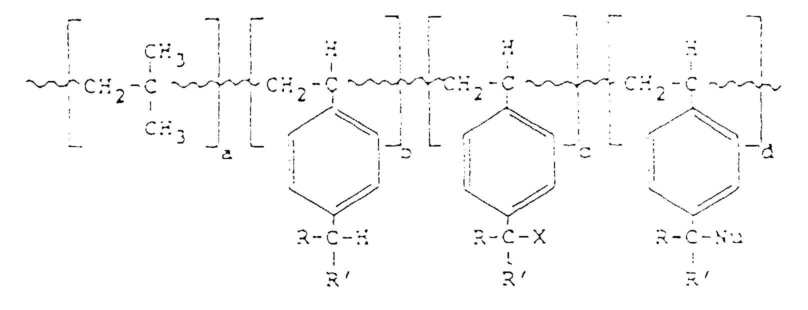 wherein R and R' are independently selected from the group consisting of hydrogen, alkyl, and the primary and secondary alkyl halides, a ranges from 14 to 70,000, b ranges from 0 to 70,000, c ranges from 0 to 70,000, d ranges from 1 to 70,000, X comprises a halogen, and Nu comprises a nucleophilic residue provided by said nucleophile (b).

3. The graft copolymer of claims 1 or 2 wherein said polymeric nucleophile comprises 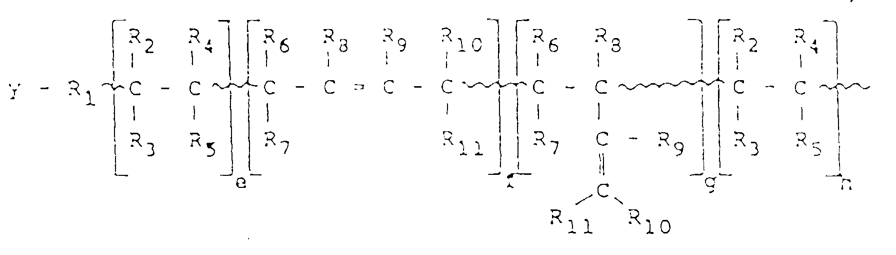 wherein R₂ and R₃ comprise a component selected from the group consisting of aryl, diaryl, polyaryl, and the alkyl, aryl, alkaryl, alkoxy, cycloalkyl, aryloxy and dialkylamino derivatives of the aryl, diaryl, or polyaryls 5, wherein R₄ through R₁₁ are independently selected from the group consisting of hydrogen, alkyl, and substituted alkyl, f ranges from 0 to 20,000, g ranges from 0 to 20,000, and h ranges from 0 to 10,000, with the further proviso that the sum of f + g + h ranges from 20 to 20,000, y comrises a linked nucleophilic residue, and furthermore, wherein either (a) R₁ is (CH₂)ₘ, wherein m is a positive integer, and e is 0 or 1, or (b) R₁ is (CH₂)ₘ, wherein m is 0, and e ranges from 0 to 1,000.

4. The graft copolymer of claim 3 wherein said linked nucleophilic residue y is selected from the group consisting of 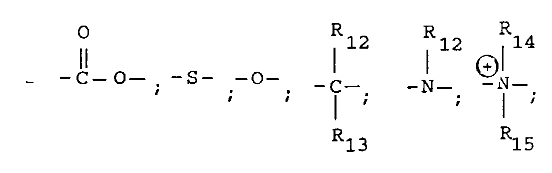 wherein R₁₂, R₁₃, R₁₄, and R₁₅ can be hydrogen, alkyl or aryl.

5. The graft copolymer of claim 4 wherein said residue is derived from yM wherein M is an alkali or alkaline earth metal, or an onium ion.

6. The graft copolymer of claims 1 - 5 wherein R and R' comprise hydrogen.

7. The grain copolymer of claims 1 - 5 wherein R and R' are independently selected from the group consisting of hydrogen, C₁ to C₅ alkyls, and C₁ to C₅ primary and secondary alkyl halides.

8. The graft copolymer of claim 2 or anyone of claims 3 - 7 as dependent on claim 2 wherein X is selected from the group consisting of chlorine, bromine and iodine.

9. The graft copolymer of claims 3 - 8 wherein R₃ is aryl.

10. The graft copolymer of claims 3 - 9 wherein R₄ and R₅ are hydrogen.

11. The graft copolymer of claims 3 - 9 wherein R₂ is aryl, and R₄ and R₅ are hydrogen.

12. The graft copolymer of claims 1 - 11 wherein said polymeric nucleophiles are one or more of polyisoprene, polybutadiene, dimethylbutadiene, and styrene-butadiene copolymer.

13. A method of compatibilizing a polymer blend of
(a) a first polymer including repeating units of the formula 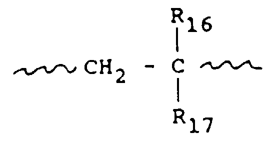 wherein R₁₆ and R₁₇ are hydrogen, aryl or alkyl, and
(b) a second polymer which is incompatible with said first polymer,
said method comprising adding to said polymer blend a compatibilizer comprising the graft copolymer of claims 1 - 12.

## Patentansprüche

1. Pfropfcopolymer aus
(a) einem Elektrophil, das ein Copolymer aus einem Isoolefin mit 4 bis 7 Kohlenstoffatomen und einem para-Alkylstyrol mit der Formel 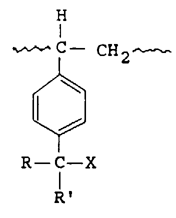 umfaßt, in dem X Halogen ist und R und R' unabhängig ausgewählt sind aus der Gruppe bestehend aus Wasserstoff, Alkylgruppen und primären und sekundären Alkylhalogenidgruppen, und
(b) einem polymeren Nukleophil mit einem Molekulargewicht von mindestens 1 000, das ausreichend nukleophil ist, so daß das Nukleophil in der Lage ist, gegenüber Benzylhalogeniden als Elektronendonor zu wirken.

2. Pfropfcopolymer nach Anspruch 1, das 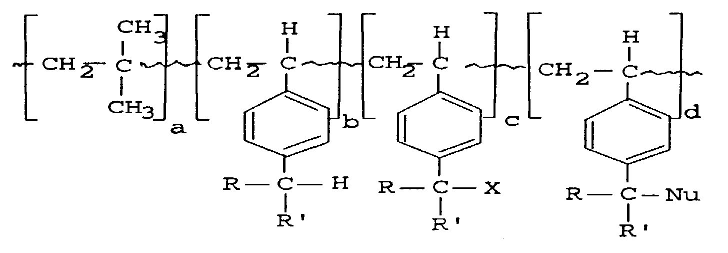 umfaßt, wobei R und R' unabhängig ausgewählt sind aus der Gruppe bestehend aus Wasserstoff, Alkylgruppen und den primären und sekundären Alkylhalogenidgruppen, a im Bereich von 14 bis 70 000 liegt, b im Bereich von 0 bis 70 000 liegt, c im Bereich von 0 bis 70 000 liegt, d im Bereich von 1 bis 70 000 liegt, X ein Halogen umfaßt und Nu einen nukleophilen Rest umfaßt. der von dem Nukleophil (b) geliefert wird.

3. Pfropfcopolymer nach Anspruch 1 oder 2, bei dem das polymere Nukleophil 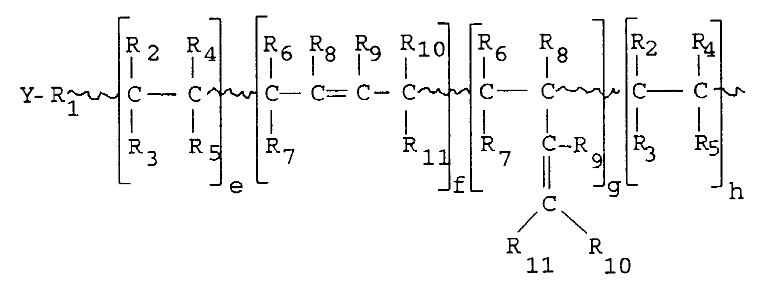 umfaßt, wobei R₂ und R₃ eine Komponente ausgewählt aus der Gruppe bestehend aus Aryl-, Diaryl-, Polyarylkomponenten und den Alkyl-, Aryl-, Alkaryl-, Alkoxy-, Cycloalkyl-, Aryloxy- und Dialkylaminoderivaten der Aryl-, Diaryl- oder Polyarylkomponenten umfaßt, R₄ bis R₁₁ unabhängig ausgewählt sind aus der Gruppe bestehend aus Wasserstoff, Alkylgruppen und substituierten Alkylgruppen, f im Bereich von 0 bis 20 000 liegt, g im Bereich von 0 bis 20 000 liegt und h im Bereich von 0 bis 10 000 liegt, mit der weiteren Maßgabe, daß die Summe aus f + g + h im Bereich von 20 bis 20 000 liegt, Y einen verbundenen nukleophilen Rest umfaßt und wobei außerdem entweder (a) R₁ (CH₂)ₘ ist, wobei m eine positive ganze Zahl ist, und e 0 oder 1 ist, oder (b) R₁ (CH₂)ₘ ist, wobei m 0 ist und e im Bereich von 0 bis 1 000 liegt.

4. Pfropfcopolymer nach Anspruch 3, bei dem der verbundene nukleophile Rest Y ausgewählt ist aus der Gruppe bestehend aus 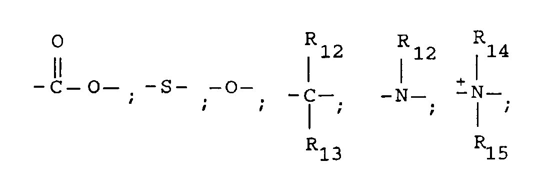 , wobei R₁₂, R₁₃, R₁₄ und R₁₅ Wasserstoff, Alkylgruppen oder Arylgruppen sein können.

5. Pfropfcopolymer nach Anspruch 4, bei dem der Rest aus yM stammt, wobei M ein Alkali- oder Erdalkalimetall oder ein Oniumion ist.

6. Pfropfcopolymer nach einem der Ansprüche 1 bis 5, bei dem R und R' Wasserstoff umfassen.

7. Pfropfcopolymer nach einem der Ansprüche 1 bis 5, bei dem R und R' unabhängig ausgewählt sind aus der Gruppe bestehend aus Wasserstoff, C₁- bis C₅-Alkylgruppen und primären und sekundären C₁- bis C₅-Alkylhalogenidgruppen.

8. Pfropfcopolymer nach Anspruch 2 oder einem der Ansprüche 3 bis 7 in Abhängigkeit von Anspruch 2, bei dem X ausgewählt ist aus der Gruppe bestehend aus Chlor, Brom und Iod.

9. Pfropfcopolymer nach einem der Ansprüche 3 bis 8, bei dem R₃ Aryl ist.

10. Pfropfcopolymer nach einem der Ansprüche 3 bis 9, bei dem R₄ und R₅ Wasserstoff sind.

11. Pfropfcopolymer nach einem der Ansprüche 3 bis 9, bei dem R₂ Aryl ist und R₄ und R₅ Wasserstoff sind.

12. Pfropfcopolymer nach einem der Ansprüche 1 bis 11, bei dem die polymeren Nukleophile eines oder mehrere aus Polyisopren, Polybutadien, Dimethylbutadien und Styrol/Butadien-Copolymer sind.

13. Verfahren zum Verträglichmachen einer Polymermischung aus
(a) einem ersten Polymer, das sich wiederholende Einheiten mit der Formel 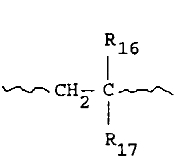 einschließt, in der R₁₆ und R₁₇ Wasserstoff, Aryl- oder Alkylgruppen sind, und
(b) einem zweiten Polymer, das mit dem ersten Polymer unverträglich ist, bei dem
zu der Polymermischung ein Verträglichmacher gegeben wird, der das Pfropfcopolymer gemäß den Ansprüchen 1 bis 12 umfaßt.

## Revendications

1. Copolymère greffé
(a) d'un agent électrophile comprenant un copolymère d'une isooléfine ayant 4 à 7 atomes de carbone et d'un para-alkylstyrène répondant à la formule 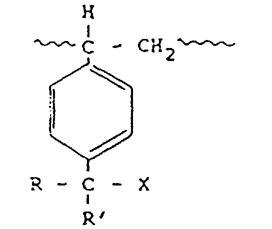 dans laquelle X représente un halogène et R et R' sont choisis indépendamment dans le groupe consistant en l'hydrogène, un groupe alkyle et des halogénures d'alkyle primaires et secondaires ; et
(b) d'un agent nucléophile polymérique ayant un poids moléculaire d'au moins 1000 et étant suffisamment nucléophile pour que ledit agent nucléophile soit capable de céder des électrons à des halogénures de benzyle.

2. Copolymère greffé suivant la revendication 1, comprenant la structure 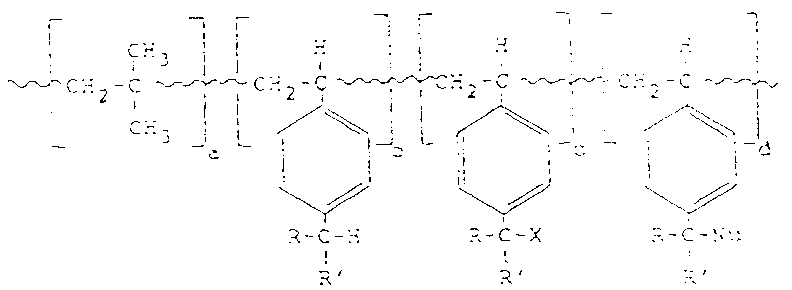 dans laquelle R et R' sont choisis indépendamment dans le groupe consistant en l'hydrogène, un groupe alkyle et des halogénures d'alkyle primaires et secondaires, a va de 14 à 70 000, b va de 0 à 70 000, c va de 0 à 70 000, d va de 1 à 70 000, X comprend un halogène et Nu comprend un résidu nucléophile fourni par ledit agent nucléophile (b).

3. Polymère greffé suivant la revendication 1 ou 2, dans lequel l'agent nucléophile polymérique comprend la structure 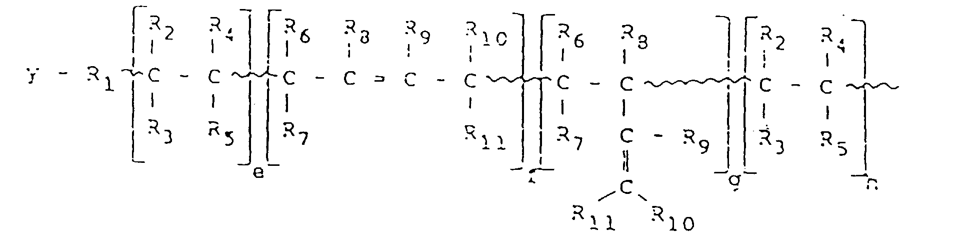 dans laquelle R₂ et R₃ comprennent un constituant choisi dans le groupe consistant en des groupes aryle, diaryle, polyaryle, et les dérivés à fonctions alkyle, aryle, alkaryle, alkoxy, cycloalkyle, aryloxy et dialkylamino, des groupes aryle, diaryle ou polyaryle, les groupes R₄ à R₁₁ sont choisis indépendamment dans le groupe consistant en l'hydrogène, des groupes alkyle et alkyle substitués, f va de 0 à 20 000, g va de 0 à 20 000 et h va de 0 à 10 000, sous la réserve supplémentaire que la somme f + g + h ait une valeur de 20 à 20 000, y comprend un résidu nucléophile lié, et, en outre, (a) R₁ représente un groupe (CH₂)ₘ, dans lequel m est un nombre entier positif et e est égal à 0 ou 1, ou bien (b) R₁ représente un groupe (CH₂)ₘ, dans lequel m est égal à 0, et e va de 0 à 1000.

4. Polymère greffé suivant la revendication 3, dans lequel le résidu nucléophile lié y est choisi dans le groupe consistant en 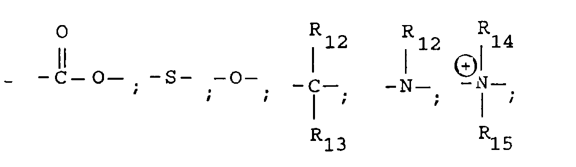 dans lesquels R₁₂, R₁₃, R₁₄ et R₁₅ peuvent représenter l'hydrogène, des groupes alkyle ou aryle.

5. Copolymère greffé suivant la revendication 4, dans lequel le résidu est dérivé de yM dans lequel M représente un métal alcalin ou alcalino-terreux ou un ion onium.

6. Copolymère greffé suivant les revendications 1 à 5, dans lequel R et R' consistent en hydrogène.

7. Copolymère greffé suivant les revendications 1 à 5, dans lequel R et R' sont choisis indépendamment dans le groupe consistant en l'hydrogène, des groupes alkyle en C₁ à C₅ et des halogénures d'alkyle primaires et secondaires en C₁ à C₅.

8. Copolymère greffé suivant la revendication 2 ou l'une quelconque des revendications 3 à 7 lorsqu'elles dépendent de la revendication 2, dans lequel X est choisi dans le groupe consistant en chlore, brome et iode.

9. Copolymère greffé suivant les revendications 3 à 8, dans lequel R₃ représente un groupe aryle.

10. Copolymère greffé suivant les revendications 3 à 9, dans lequel R₄ et R₅ représentent l'hydrogène.

11. Copolymère greffé suivant les revendications 3 à 9, dans lequel R₂ représente un groupe aryle et R₄ et R₅ représentent l'hydrogène.

12. Copolymère greffé suivant les revendications 1 à 11, dans lequel les agents nucléophiles polymériques consistent en un ou plusieurs des polymères consistant en polyisoprène, polybutadiène, diméthylbutadiène et copolymère styrène-butadiène.

13. Procédé pour rendre compatible un mélange de polymères constitué
(a) d'un premier polymère comprenant des motifs répétés de formule 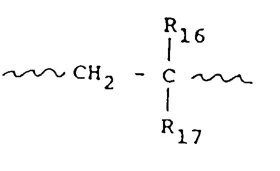 dans laquelle R₁₆ et R₁₇ représentent l'hydrogène, des groupes aryle ou alkyle, et
(b) d'un second polymère qui est incompatible avec ledit premier polymère,
ledit procédé comprenant l'addition à ce mélange de polymères d'un agent de compatibilité comprenant le copolymère greffé suivant les revendications 1 à 12.
